Europäisches Patentamt

European Patent Office

Office européen des brevets

(19)

(11) Publication number: **0 123 742**
**B1**

(12) # EUROPEAN PATENT SPECIFICATION

(45) Date of publication of patent specification: **19.11.87**

(51) Int. Cl.⁴: **A 23 G 3/30**

(21) Application number: **83302394.8**

(22) Date of filing: **27.04.83**

(54) Low-calorie, sugar-free chewing gum containing polydextrose.

(43) Date of publication of application:
**07.11.84 Bulletin 84/45**

(45) Publication of the grant of the patent:
**19.11.87 Bulletin 87/47**

(84) Designated Contracting States:
**AT BE CH DE GB LI LU NL SE**

(56) References cited:
**GB-A-2 066 044**
**US-A-3 766 165**

**CHEMICAL ABSTRACTS, vol. 95, 1981, page
529, no. 23075d, Columbus, Ohio, US; UNITED
STATES FOOD AND DRUG ADMINISTRATION:
"Polydextrose; food additives for human
consumption"**

**CHEMICAL ABSTRACTS, vol. 97, 1982, page
572, no. 125853q, Columbus, Ohio, US;
R.E.SMILES: "The fuctional applications of
polydextrose"**

(73) Proprietor: **GENERAL FOODS CORPORATION
250 North Street
White Plains, N.Y. 10625 (US)**

(72) Inventor: **Klose, Robert Edward
9, Brook Hill Drive
West Nyack N.Y. 10994 (US)**
Inventor: **Sjonvall, Ragnar Edward
9, Lorraine Drive
Eastchester N.Y. 10709 (US)**

(74) Representative: **Baillie, Iain Cameron et al
c/o Ladas & Parry Isartorplatz 5
D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 123 742**

**Description**

This invention relates to the preparation of novel sugar-free, low-calorie chewing gum products utilizing polydextrose as the sole soluble bulking agent.

Sugarless confectionary compositions and in particular sugarless chewing gums have become desirable food items due to the efforts of the dental profession in discouraging the use of sucrose-containing confectionaries. Recently the United States Food and Drug Administration approved the Pfizer Inc. food additive petition for the use of polydextrose in specific food categories. Specifially, polydextrose was approved for use in chewing gums as well as numerous other applications. Polydextrose is a reduced calorie bulking, bodying, or texturizing agent which provides less than one calorie per gram. It is useful in replacing sugar, specifically acting as a substitute for the bulking activity of sugar, giving consistency and texture to food. However, polydextrose does not contain the sweetness properties normally associated with sugar. As such, therefore, polydextrose is not a sweetener and is not a substitute for saccharin.

Pfizer Inc., the manufacturer of polydextrose, in its promotional material advertising polydextrose in various food applications has included therein a recipe for a polydextrose chewing gum. However, Pfizer has only been able to utilize polydextrose to replace approximately 50% of the sorbitol (or sugar alcohol) which would normally be found in a conventional sugar alcohol gum formula. The use of polydextrose as the sole soluble bulking agent in a sugar-free gum was considered to be an unattainable objective because excessive stickiness made processing difficult. In order to make a polydextrose gum it was thought necessary to incorporate a significant amount of sugars and/or sugar alcohols to attain good processing parameters and to obtain a gum product possessing good organoleptic qualities.

It is an object of the present invention to prepare a low calorie chewing gum product possessing good textural and processing properties which is made using polydextrose as the sole bulking agent. Also, since polydextrose is not a sweetening agent the total replacement of polydextrose for the sugar or sugar alcohols normally present as bulking agents in the gum will allow the production of a non-sweet chewing gum which can be used with a snack-type flavor or alternatively a low calorie sweetened gum can be prepared with aspartame or another intensive low-calorie sweetener.

This invention relates to the preparation of a novel sugar-free, low-calorie chewing gum utilizing polydextrose as the sole soluble bulking agent. This invention permits the production of a gum without the presence of sugar or sugar alcohols which normally are present to provide bulk. Preparation of these low calorie sugarless gum products are made possible by omitting the aqueous component that is normally used in sugar gum (corn syrup) or sugarless gum with sugar alcohols (sorbitol syrup).

Sugar and sugar alcohols may be defined as bulking agents and generally comprise a major amount by weight of the total gum composition. The word, sugar, as defined in this application is meant to include sucrose, dextrose, corn syrup solids (their substitutes) and the like and mixtures thereof. Sugar alcohols, also known as polyols, include mannitol, sorbitol, xylitol, galactitol, glycerol, erythritol and the like and mixtures thereof.

Polydextrose is a food ingredient further described in U.S. Patent 3,766,165 which is assigned to Pfizer, Inc. Polydextrose is a water soluble, randomly-bonded, condensation polymer of dextrose containing minor amounts of bound sorbitol and citric acid. Pfizer, Inc. has marketed polydextrose in two forms. It is available in a powdered acid form having a pH range in solution of about 2.5—3.5 and in a neutralized 70% solution which has a pH range of about 5—6. The neutral form of polydextrose is a viscous, hydroscopic, tacky solution which resembles sugar syrup and which is not easy to dry and even when dried often cakes to a hydroscopic sticky mass. The acid powder form of polydextrose, while it may be easier to use, is undesirable in many food applications including many chewing gum recipes because of its acidic nature. Applicants are able to produce unsweetened snack-type flavored chewing gums or artificially sweetened chewing gums which contain polydextrose as the sole bulking agent by using the neutralized form of polydextrose which has been previously sprayed dried. Alternatively grape, orange, lemon or cherry flavored, artifically sweetened gums may be prepared by using the powdered acidic form of polydextrose because those types of flavors are compatible with an acidic formula.

The key to obtaining a good quality gum product and avoiding excessive stickiness during processing is starting with a low-moisture containing polydextrose powder (below 5% moisture) and maintaining a low moisture content throughout all processing steps. The first product having a moisture content of from 1% to 5% by weight, spray-dried, low-moisture, neutralized polydextrose was prepared from the neutralized 70% solution of polydextrose (Polydextrose Type N, Pfizer) by using a Whirljet type 1/1TC nozzle and the following spray-drying conditions:

| | |
|---|---|
| Inlet air temperature | 202°C |
| Outlet air temperature | 111°C |
| Airflow, exhaust speed | 78 cm min. |
| Spray pressure | (8930 kg/m²) .876 bar |
| Feed concentration | 51.4% |
| Feed temperature | 56.56°C |
| Throughput rate | 98 kg solids/hr |

2

**0 123 742**

The spray-dried powder had a bulk density of 0.66 g/cc. and had a moisture content lower than 1.5%.

The use of 100% polydextrose as a bulking agent will yield a product which is non-sweet and is especially desirable where sweetness is detrimental to the final chewing gum product. Additionally the polydextrose will contain only one calorie per gram while the sugar alcohol or polyol typically contains on the range of 4 calories per gram. The incorporation of polydextrose as the sole bulking agent in the chewing gum product of the present invention results in a chewing gum product having a caloric density of under 1 calorie per gram.

According to the present invention a sugarless chewing gum composition is formed with from about 65 to 85% by weight of polydextrose, from about 15 to 35% by weight of a gum base with the remainder of a constituents present in the chewing gum consisting of softening agents, flavoring agents and coloring agents. Preferably polydextrose is present from 65 to 80% by weight of the gum and the gum base is present at a level of from about 20 to 30% by weight.

The final chewing gum product has a moisture content from about 1.0% to 5.0% by weight, preferably from 2.0% to 3.0%. The gum bases which may be employed in this invention may include masticatory substances of natural or synthetic origin, synthetic resins, waxes, fillers, and emulsifiers.

Flavor and color agents may be added to the chewing gum composition of this invention as desired. Flavoring agents include all natural, essential, or synthetic flavoring oils and compounds normally accepted for food use. Flavors such as wintergreen, spearmint, peppermint, birch, anise, fruit flavors, and the like may be used satisfactorily with the variety of gum bases. The amount of flavoring material is normally a matter of preference, but may be subject to the consideration of such factors as type of flavor used and the type of base used and the like. Generally, flavoring materials account for about 1% by weight or less of the total gum composition.

Plasticizers or softeners such as lanolin, propylene glycol, glycerol, lecithin and the like as well as mixtures thereof may optionally be incorporated within the gum base to achieve a desired texture and consistency. Aspartame may optionally be incorporated in the chewing gum composition of the present invention and will contain 0.1% or more by weight basis, preferably from 0.3 to 0.7%. Alternatively, the chewing gum composition of the present invention may be combined with saccharin at a level of from 0.05% to 0.3% on a by weight basis preferably from 0.075% to 0.20%.

Best mode for carrying out the invention

This invention is further illustrated by the following examples.

Example 1

A low-calorie sugarless chewing gum with polydextrose as the sole soluble bulking agent is prepared with aspartame incorporated as an intensive sweetener, as follows:

Low-Calorie spearmint flavor chewing gum with aspartame

| Ingredient | % Composition |
| --- | --- |
| Polydextrose, type N (neutralized), spray dried | 70.7 |
| Gum base | 27.0 |
| Spearmint flavor | 1.1 |
| Lecithin | 0.6 |
| Aspartame (APM) | 0.6 |
| | 100.00 |

Procedure

The presoftened gum base and lecithin were added to the steam jacketed mixer (Sigma Mixer) and mixed at 45°C for three minutes. Two-thirds of the polydextrose was added and mixing continued for an additional five minutes. The remaining one-third polydextrose and APM were pre-blended, added to the mixer, and mixing continued for one minute. The flavor was added and mixing continued for three minutes. The gum was removed from the mixer (final temperature 53°C), then passed through sheeting rolls to a thickness of .179 to .19 cm. The sheets were tempered at −5.6°C/55% RH for 24 hours, then scored into sticks and packaged. The sticks were 6.9×1.9cm and weighed approximately 2.75 grams per stick.

The caloric content of each 2.75 gram stick was approximately 2 calories per stick, based on a caloric content of 1 calorie per gram of polydextrose. This compares to approximately 7—8 calories per stick of the same weight containing sugar or sugar alcohols incorporated as soluble bulking agents.

Example 2

A low calorie, non-sweet chewing gum with a snack type flavor was prepared with polydextrose as the sole soluble bulking agent. No intensive sweetener was used in the formulation, in order to provide a bland, non-sweet background for the snack flavor.

3

**0 123 742**

### Low calorie pizza flavored chewing gum

| Ingredient | % Composition |
|---|---|
| Polydextrose, type N (neutralized), spray dried | 71.6 |
| Gum base | 27.0 |
| Lecithin | 0.6 |
| Pizza flavor | 0.8 |
| | 100.0 |

The procedure used was the same as Example 1, except aspartame was omitted.
The caloric content was similar to Example 1.

Example 3

A low calorie chewing gum with a sour or acid type flavor was prepared by using the acid powder form of polydextrose as the sole soluble bulking agent with a grape flavor and aspartame as an intensive sweetener.

### Low calorie grape flavored chewing gum

| Ingredient | % Composition |
|---|---|
| Polydextrose (powdered acid form) | 70.5 |
| Gum base | 27.0 |
| Grape flavor | 1.3 |
| Lecithin | 0.6 |
| Aspartame | 0.6 |
| | 100.0 |

The procedure and caloric content is similar to Example 1.

**Claims for the Contracting States: BE, CH, DE, GB, LI, LU, NL, SE**

1. A sugar-free chewing gum with a caloric density of less than one caloric per gram containing polydextrose as the sole soluble bulking agent comprising from 65% to 85% by weight of spray-dried polydextrose having a moisture content of less than 5% and from 15% to 35% by weight of a gum base and if desired an optional flavouring and/or colouring agent and/or plasticizer and/or softener, said chewing gum having a moisture content from 1% to 5% by weight.

2. The chewing gum of Claim 1 which comprises from 65 to 80% polydextrose, from 20 to 30% gum base and a moisture content from 2.0 to 3.0%.

3. The chewing gum of Claims 1 or 2 further comprising the addition of aspartame as an optional flavouring at a level of 0.1% or more on a by weight basis.

4. The chewing gum of Claim 3 wherein the level of aspartame is from 0.3% to 0.7%.

5. The chewing gum of Claims 1 or 2 further comprising the addition of saccharin as an optional flavouring at a level of from 0.05% to 0.3% on a by weight basis.

6. The chewing gum of Claim 5 wherein the level of saccharin is from 0.075% to 0.20% on a by weight basis.

**Claims for the Contracting State: AT**

1. A method of preparing a sugar-free, chewing gum with a caloric density of less than one calorie per gram by combining with the chewing gum ingredients polydextrose as the sole soluble bulking agent comprising from 65% to 85% by weight of spray-dried polydextrose having a moisture content of less than 5% and from 15% to 35% by weight of a gum base and if desired an optional flavouring and/or colouring agent and/or plasticizer and/or softener, said chewing gum having a moisture content from 1% to 5% by weight.

2. A method according to claim 1 which comprises adding from 65 to 80% polydextrose, from 20 to 30% gum base and a moisture content from 2.0 to 3.0%.

3. A method according to either of claims 1 or 2 further comprising addition of aspartame as an optional flavouring at a level of 0.1% or more on a by weight basis.

4. A method according to claim 3 wherein the level of aspartame added is from 0.3% to 0.7%.

5. A method according to any one of claims 1 to 4 in which there is also added saccharin as an optional flavouring at a level of from 0.05% to 0.3% on a by weight basis.

4

6. A method according to claim 5 wherein the level of saccharin added is from 0.075% to 0.20% on a by weight basis.

**Patentansprüche für die Vertragsstaaten: BE, CH, LI, DE, GB, LU, NL, SE**

1. Zuckerfreier Kaugummi mit einem Kaloriengehalt von weniger als 1 Kalorie pro Gramm und mit Polydextrose als einzigem löslichem Füllstoff, wobei der Kaugummi 65 bis 85 Gew.% sprühgetrocknete Polydextrose mit einer Feuchte von weniger als 5% und in einer Menge von 15 bis 35 Gew.% eine Gummigrundlage enthält und ferner gegebenenfalls einen Geschmacksstoff und/oder einen färbenden Stoff und/oder einen Weichmacher und der Kaugummi eine Feuchte von 1 bis 5 Gew.% hat.

2. Kaugummi nach Anspruch 1, der 65 bis 80% Polydextrose und 20 bis 30% Gummigrundlage enthält und eine Feuchte von 2,0 bis 3,0% hat.

3. Kaugummi nach Anspruch 1 oder 2, gekennzeichnet durch einen Zusatz von mindestens 0,1 Gew.% Aspartam als wahlweise verwendbarem Geschmacksstoff.

4. Kaugummi nach Anspruch 3, gekennzeichnet durch einen Aspartamgehalt von 0,3 bis 0,7%.

5. Kaugummi nach Anspruch 1 oder 2, gekennzeichnet durch einen Zusatz von 0,05 bis 0,3 Gew.% Saccharin als wahlweise verwendbarem Geschmacksstoff.

6. Kaugummi nach Anspruch 5, gekennzeichnet durch einen Saccharingehalt von 0,075 bis 0,20 Gew.%.

**Patentansprüche für den Vertragsstaat: Österreich**

1. Verfahren zum Herstellen eines zuckerfreien Kaugummis mit einem Kaloriengehalt von weniger als einer Kalorie pro Gramm, in dem in den Bestandteilen des Kaugummis Polydextrose als einziger löslicher Füllstoff in einer Menge von 65 bis 85 Gew.% sprügetrockneter Polydextrose mit einer Feuchte von 5 bis 15 Gew.% und 15 bis 34 Gew.% einer Gummigrundlage und gegebenenfalls ein Geschmacks- und/oder färbender Stoff und/oder ein Weichmacher vereinigt werden, wobei der Kaugummi eine Feuchte von 1 bis 5 Gew.% hat.

2. Verfahren nach Anspruch 1, dadurch gekennzeichnet, daß 65 bis 80% Polydextrose und 20 bis 30% Gummigrundlage verwendet werden und die Feuchte 2,0 bis 3,0 beträgt.

3. Verfahren nach Anspruch 1 oder 2, gekennzeichnet durch die Zugabe von mindestens 0,1 Gew.% Aspartam als wahlweise verwendetem Geschmacksstoff.

4. Verfahren nach Anspruch 3, dadurch gekennzeichnet, daß das Aspartam in einer Menge von 0,3 bis 0,7% hinzugefügt wird.

5. Verfahren nach einem der Ansprüche 1 bis 4, dadurch gekennzeichnet, daß auch 0,05 bis 0,3 Gew.% Saccharin als wahlweise verwendeter Geschmacksstoff hinzugeführt wird.

6. Verfahren nach Anspruch 5, dadurch gekennzeichnet, daß das Saccharin in einer Menge von 0,075 bis 0,20 Gew.% hinzugefügt wird.

**Revendications pour les Etats Contractants: BE, CH, LI, DE, GB, LU, NL, SE**

1. Chewing-gum sans sucre, ayant une densité de calories inférieure à 1 calorie/g, contenant du polydextrose comme seul agent de masse soluble, comprenant de 65 à 85% en poids de polydextrose séché par pulvérisation, présentant une teneur en humidité inférieure à 5%, et de 15 à 35% en poids d'une base de gomme, et, si on le désire, facultativement un agent aromatisant et/ou un agent colorant et/ou un agent plastifiant et/ou un agent adoucissant, ce chewing-gum ayant une teneur en humidité de 1 à 5% en poids.

2. Chewing-gum suivant la revendication 1, caractérisé en ce qu'il comprend de 65 à 80% de polydextrose, de 20 à 30 % de base de gomme, et une teneur d'humidité de 2,0 à 3,0%.

3. Chewing-gum suivant la revendication 1 ou 2, caractérisé en ce qu'il comprend en outre l'addition d'aspartame à titre d'agent aromatisant facultatif à raison de 0,1% ou plus en poids.

4. Chewing-gum suivant la revendication 3, caractérisé en ce que le taux d'aspartame est de 0,3 à 0,7%.

5. Chewing-gum suivant la revendication 1 ou 2, caractérisé en ce qu'il comprend en outre l'addition de saccharine comme agent aromatisant facultatif à raison de 0,05 à 0,3% en poids.

6. Chewing-gum suivant la revendication 5, caractérisé en ce que le taux de saccharine est de 0,075 à 0,20% en poids.

**Revendications pour les Etats Contractant: Austria**

1. Procédé de préparation d'un chewing-gum sans sucre, ayant une densité en calories inférieure à 1 calorie/g, par combinaison avec les ingrédients de chewing-gum, de polydextrose comme seul agent de masse soluble, comprenant de 65 à 85% en poids de polydextrose séché par pulvérisation, ayant une teneur en humidité inférieure à 5%, et de 15 à 35% en poids d'une base de gomme, et, si on le désire, facultativement un agent aromatisant et/ou un agent colorant et/ou un agent plastifiant et/ou un agent adoucissant, ce chewing-gum ayant une teneur en humidité de 1 à 5% en poids.

**0 123 742**

2. Procédé suivant la revendication 1, caractérisé en ce qu'il comprend l'addition de 65 à 80% de polydextrose, de 20 à 30% de base de gomme, avec une teneur en humidité de 2,0 à 3,0%.

3. Procédé suivant l'une ou l'autre des revendications 1 et 2, caractérisé en outre par l'addition d'aspartame à titre d'agent aromatisant facultatif à raison de 0,1% ou plus en poids.

4. Procédé suivant la revendication 3, caractérisé en ce que le taux d'aspartame ajouté est de 0,3 à 0,7%.

5. Procédé suivant l'une quelconque des revendications 1 à 4, caractérisé en ce qu'on ajoute en outre de la saccharine comme agent aromatisant facultatif à raison de 0,05% à 0,3% en poids.

6. Procédé suivant la revendication 5, caractérisé en ce que le taux de saccharine ajouté est de 0,075 à 0,20 % en poids.